# EUROPÄISCHE PATENTSCHRIFT

(11) **EP 2 093 255 B1**
(45) Veröffentlichungstag und Bekanntmachung des Hinweises auf die Patenterteilung: **06.06.2012**
(21) Anmeldenummer: 08021557.7
(22) Anmeldetag: 11.12.2008
(51) Int. Cl.: C08L 77/06, C08G 69/36, C08K 5/098, C08K 5/101, G02B 1/04

(54) **Transparente Polyamidformmasse**
Transparent polyamide moulding composition
Compositions de moulage transparentes à base de polyamide

(30) Priorität: 21.12.2007 DE 102007062063
(43) Veröffentlichungstag der Anmeldung: 26.08.2009
(73) Patentinhaber: EMS-PATENT AG, 7013 Domat/Ems (CH)
(72) Erfinder: Bühler, Friedrich Severin, 7430 Thusis (CH); Rytka, Christian, 7402 Bonaduz (CH); Tobisch, Walter, 7015 Tamins (CH); Bass, Sepp, 7013 Domat/Ems (CH)
(74) Vertreter: Pfenning, Meinig & Partner GbR

(56) Entgegenhaltungen:
- EP-A1- 0 725 100
- EP-A1- 1 570 983
- WO-A1-2007/087896

## Beschreibung

Die Erfindung betrifft die Rezeptur, Herstellung und Ausrüstung von transparenten, amorphen oder mikrokristallinen Polyamiden, Copolyamiden oder Polyamidblends mit verbesserter Kratzfestigkeit.

Die Kratzfestigkeit ist der Widerstand einer Oberfläche gegen einmalig auftretende mechanische äussere Einflüsse, z.B. die Kratzbewegung einer scharfen Kante. Unterschieden wird in: Pflügende Kratzbelastung, Stick-Slip Kratzbelastung und schneidende Kratzbelastung.

Die Abriebsfestigkeit ist die Festigkeit gegen den fortschreitenden unerwünschten Materialverlust der Nutzoberfläche von Kunststoffen, der durch die schneidende oder kratzende lostrennende Wirkung eines Reibepartners hervorgerufen wird.

Transparente Polyamide besitzen eine hervorragende Transparenz und einen niedrigen Haze (Trübung). Die meisten Additive verändern diese optischen Eigenschaften sehr negativ. Die Gebrauchsfähigkeit transparenter Produkte hängt wesentlich von der Trübung (Haze) ab, die durch das Beschädigen der Oberfläche verstärkt wird. Eine besondere Art der Kratzfestigkeit ist z.B. die Resistenz einer unlackierten Kunststoffoberfläche gegenüber einem PE-Pen. Diese Eigenschaft wird zum Beispiel in Displayanwendungen, die mit einem PE-Pen bedient werden, gefordert.

Die US 2007/0066726 A1 beschreibt die Verbesserung der Kratzfestigkeit in ABS, PBT, PVC, PET, Nylon 6, Nylon 66, ABS/PBT, PC/ABS mit Additiven. Additive sind mit Carbonsäuren funktionalisierte Olefinpolymere oder Copolymere wie Polybond oder Epolene und Fettsäureamide. Geeignete Fettsäureamide sind Ölsäure, Palmitinamid und Stearylerucamid. Die ausgerüsteten Polymere zeigen ausgezeichnete Kratzfestigkeit, Witterungsstabilität, gutes Verarbeitungsverhalten und gute mechanische Eigenschaften unter Beibehaltung eines hohen Glanzwertes. Der Druckschrift sind jedoch keine Angaben zum Verhalten der optischen Eigenschaften in transparenten Polymeren zu entnehmen.

Die EP 0 943 651 beschreibt Copolyester-Elastomere mit Shore D = 25 - 82 und 0.1-1.0 % Fluoralkylethylenen zur Verbesserung der Kratzfestigkeit. Die Kratzfestigkeit wurde mit einem Erichson-Scratch-Tester nach ISO 1518 getestet. Der Druckschrift ist genauso wenig ein Hinweis auf das Verhalten der Transparenz in transparenten Polyamiden zu entnehmen.

Aus der EP 0 682 679 ist die Erhöhung der Kratzfestigkeit von PP mit Talg bekannt. Die Kratzfestigkeit kann durch Zusatz von Polysiloxanen weiter verbessert werden, wie dies z.B. in der US 5.731.376 beschrieben ist. Der Scratch-Test wurde mit einem Tester von "Sheen Instruments Ltd." ausgeführt und visuell bewertet. Die vermessenen Teile sind stets aus PP und somit nicht transparent. Ein Rückschluss auf den Einfluss der verwendeten Materialien auf die Kratzfestigkeit von Polyamiden lässt die Patentschrift jedoch nicht zu.

Die WO 2007/087896 beschreibt eine PA-Rezeptur zusammen mit Gleitmitteln, die jedoch nur allgemein erwähnt werden, es werden hierzu keine weiteren Angaben gemacht.

In der EP 1 570 983 sind transparente Polyamide und verschiedene Gleitmittel beschrieben. Der Begriff "Kratzfestigkeit" wird im Zusammenhang mit der Haftungsprüfung eines Hardcoats (Hartlackbeschichtung) auf einer Linse erwähnt. Die Kratzfestigkeit resultiert gemäß dieser Patentschrift stets aus der Hartlackbeschichtung.

Die DE 101 22 188 erwähnt hochbrechende (optischer Brechungsindex) transparente Copolyamide, die unter anderem auch eine hohe Kratzfestigkeit aufweisen, wobei die Diamine vorzugsweise aus solchen mit aromatischen Kernen ausgewählt sind. Gleitmittel sind nur allgemein unter den möglichen Additiven erwähnt.

Die gemäß der JP 2003-118055 hergestellten Polyamide werden generell als relativ kratzfest eingestuft, jedoch wurden stets normale aliphatische Polyamide verwendet.

Bei der JP 08-083515 besteht die transparente und kratzbeständige Oberflächenschicht aus Polyamidimid, also nicht aus einem Polyamid, sondern aus einem Polymer das nur ein "halbes" Polyamid ist. In diesem sind gemäß der Lehre dieser Druckschrift cycloaliphatische Diamine enthalten.

Die US 4.740.450 beschreibt keine PA-Formmassen,sondern die Verbesserung der Kratzbeständigkeit der Oberfläche von reproduzierten Bildern bzw. Fotografien. Polyamid wird neben anderen Polymeren nur als mögliches Binder- bzw. Schmelzklebermaterial genannt. Gemäß diesem US-Patent wird die photosensitive Harzschicht oder eine darauf aufgetragene Schicht mit einem Kratzbeständigkeitsverbesserer (scratch resistance improver) ausgerüstet, wobei viele geeignete Verbindungen aufgezählt werden.

Von diesem technologischen Hintergrund ausgehend war es Aufgabe der vorliegenden Erfindung, eine transparente Polyamidzusammensetzung anzugeben, die eine erhöhte Kratzfestigkeit aufweist. Insbesondere sollen dabei die hervorragenden optischen Eigenschaften transparenter Polyamide nicht negativ beeinflusst werden. Ebenso ist es Aufgabe der vorliegenden Erfindung, aus der entsprechenden Polyamidzusammensetzung gebildete Formteile und entsprechende Verwendungsmöglichkeiten anzugeben.

Diese Aufgabe wird bezüglich der Polyamidformmasse mit den Merkmalen des Patentanspruchs 1 gelöst. Mit Patentanspruch 14 werden aus der PA-Zusammensetzung hergestellte Formteile angegeben. Die jeweiligen abhängigen Ansprüche betreffen vorteilhafte Ausgestaltungen.

Erfindungsgemäß wird eine transparente Polyamidformmasse, enthaltend mindestens ein Copolyamid und ein Gleitmittel, bereitgestellt, wobei die Polyamidformmasse
(A1) 50 bis 99,99 Gew.-Teile eines Copolyamides, aufgebaut aus:
   a) 15 bis 42 mol% Bis- (4-amino-3-methyl-cyclohexyl)methan (MACM), das bis zu 50 Mol-% durch Bis-(4-amino-cyclohexyl)methan (PACM) ersetzt sein kann,
   b) 15 bis 42 Mol-% Isophthalsäure (IPS), die bis zu 50 Mol-% durch Terephthalsäure (TPS) und/oder aliphatische Dicarbonsäuren ersetzt sein kann, und
   c) 16 bis 70 Mol-% Laurinlactam (LC 12), und
(A2) 0 bis 49,99 Gew.-Teile eines transparenten Polyamids basierend auf MACM und/oder PACM und Dicarbonsäuren mit mindestens 9 C-Atomen, und
(A3) 0 bis 29,99 Gew.-Teile eines aliphatischen Polyamids basierend auf Monomeren ausgewählt aus Diaminen mit mindestens 8 C-Atomen, Dicarbonsäuren mit mindestens 10 C-Atomen, Lactamen mit mindestens 10 C-Atomen und Aminocarbonsäuren mit mindestens 10 C-Atomen, wobei die Summe von (A2) und (A3) maximal 49,99 Gew.-Teile beträgt, und
(B) 0,01 bis 5 Gew.-Teile mindestens eines Gleitmittels ausgewählt aus Salzen der Stearinsäure, Isotridecylstearat Montansaüreester und/oder Salzen der Montansäuren, und
(C) 0 bis 3 Gew.-Teile weitere Additive enthält, mit der Maßgabe, dass die Summe von (A1) und (A2) und (A3) und (B) 100 Gewichtsteile ergibt.

Überraschenderweise wurde nun gefunden, dass Polyamide durch die erfindungsgemäße Wahl der Monomeren in der Kratzfestigkeit beeinflusst werden können. Es wurden Zusammensetzungen gefunden, die vergleichbare Kratzfestigkeiten besitzen, wie beispielsweise Formteile aus Polycarbonat, die mit Hartlack beschichtet sind.

Dabei liegen diese erfindungsgemäßen Polyamide im Bereich mittlerer Steifigkeit bei ausgezeichneter Zähigkeit. Gleichzeitig wird eine ausgezeichnete Transparenz nahe der von PMMA mit Haze-Werten unter 1.0 % erhalten.

Ferner wurde gefunden, dass die Kratzfestigkeit durch die Auswahl sowie den erfindungsgemäßen Gehalt an Gleitmitteln noch weiter gesteigert werden kann und dabei gleichzeitig die hervorragende Transparenz beibehalten wird. Aus dem Stand der Technik ist die Problematik bekannt, dass Gleitmittel den Haze erhöhen und die Transmission reduzieren.

Überraschenderweise wurden Gleitmittel gefunden, die die Transparenz nicht negativ beeinflussen, den Haze nicht erhöhen und die Kratzfestigkeit der transparenten Polyamide verbessern. Diese Gleitmittel können direkt durch Mischen mit dem Polymer oder bevorzugt als hochkonzentrierter Masterbatch dem Polymer zugegeben werden.

Hervorragend für den erfindungsgemäßen Einsatz geeignet sind Salze der Stearinsäure, Isotridecylstearat und/oder Salze der Montansäuren, Montansäureester und deren Ca-Salze (Licomont und Licomont CAV Typen), da sie eine geringe Trübung zeigen.

Hierdurch wird die Kratzfestigkeit gegenüber Belastungen im Alltag oder gegenüber von PE-Pens verbessert. Verbesserte Kratzfestigkeit verhindert Glanzverluste oder das Eintrüben der Oberfläche. Dadurch bleiben optische Funktionen, kosmetisches Aussehen oder die Gleiteigenschaften im Gebrauch länger erhalten, wodurch die Sicherheit und die Lebensdauer solcher Bauteile wesentlich erhöht wird.

Insbesondere wird die Resistenz der Oberfläche der erfindungsgemäßen Polyamidzusammensetzung gegen Verkratzen durch die Einwirkung von harten oder weichen Materialien deutlich verbessert. Solche Materialien können Gegenstände in einer Handtasche, Reinigungstücher oder Waschbürsten sein.

Bevorzugt ist, wenn das mindestens eine Gleitmittel (B) mit einem Anteil von 0,1 bis 3 Gew.-%, weiter bevorzugt 0,2 bis 2 Gew.-%, besonders bevorzugt 0,5 bis 1,5 Gew.-% und äußerst bevorzugt 0,8 bis 1,2 Gew.-% enthalten ist.

Ein besonders bevorzugtes Gleitmittel ist ein Ca-Salz der Montansäuren und/oder Isotridecylstearat, Stearylstearat und/oder ein Metallstearat, wobei Isotridecylstearat (Handelsname Loxiol G 40) besonders bevorzugt ist.

Eine bevorzugte Auswahl an Monomeren sieht vor, dass das Copolyamid (A1) aus den Edukten
a) 30 bis 42 Mol-% MACM, das bis zu 50 Mol-% durch PACM ersetzt sein kann,
b) 30 bis 42 Mol-% IPS, die bis zu 50 Mol-% durch TPS und/oder aliphatische Dicarbonsäuren ersetzt sein kann, und
c) 16 bis 40 Mol-% LC 12 aufgebaut ist.

Insbesondere kommt hierbei die folgende Auswahl an Edukten in Frage:
a) 35 bis 40 Mol-% MACM
b)
   18 bis 22 Mol-% IPS sowie
   16 bis 20 Mol-% TPS und
c) 22 bis 27 Mol-% LC 12.

Die weiteren Additive (C) sind dabei bevorzugt ausgewählt aus der Gruppe der UV-Stabilisatoren, Hitzestabilisatoren, Katalysatoren, transparente Farbstoffe, phototrope Additive, Antistatikmittel, Verarbeitungshilfsmittel und Lasermarkieradditive.

Die relative Viskosität (RV) der Polyamidformmasse gemessen in 0,5 %-iger m-Kresollösung beträgt dabei bevorzugt > 1,45, besonders bevorzugt 1,53 bis 1,56.

Die Polyamidformmasse ist gekennzeichnet durch einen bevorzugten Tg-Wert von > 175 °C.

Bei Prüfung der Polyamidformmasse in Form einer Platte mit einer Dicke von 2 mm ist die Trübung (Haze) gemessen nach dem Byk Gardner Test gemäß ASTM 1003 um bevorzugt maximal 200 % größer als die einer 2 mm dicken Platte aus einer sonst gleichen Polyamidformmasse aber ohne Gleitmittel (B).

Ebenso ist es vorteilhaft, wenn die Polyamdiformmasse bei Prüfung in Form einer Platte mit einer Dicke von 2 mm eine Trübung (Haze) gemessen nach dem Byk Gardner Test gemäß ASTM 1003 nach einer Behandlungsdauer von 2 Stunden im Tumbler aufweist, die kleiner ist als die einer 2 mm dicken Platte aus einer sonst gleichen Polyamidformmasse aber ohne Gleitmittel (B), welche auch derselben Behandlung im Tumbler unterworfen wurde.

Die Formmassen weisen exzellente Transparenz auf. Hierbei ist es vorteilhaft, wenn die Transmission bei Prüfung in Form einer Platte mit einer Dicke von 2 mm > 90 %, bevorzugt > 91 % beträgt.

Eine weitere vorteilhafte Ausgestaltungsform sieht vor, dass ein aus der Polyamidformmasse hergestellter Prüfkörper einen E-Modul von mindestens 1800 MPa aufweist.

Erfindungsgemäß werden ebenso Formteile, hergestellt aus der erfindungsgemäßen transparenten Polyamidformmasse, bereitgestellt. Die Formteile können dabei mit oder ohne zusätzliche Oberflächenbeschichtung, wie z.B. einer Hardcoat-Lackierung, ausgestaltet sein.

Als Verarbeitungs- bzw. Herstellungsverfahren für die Formteile aus den erfindungsgemässen Formmassen kommen im Prinzip alle thermoplastischen Umformungsverfahren in Frage, z.B. Spritzgiessen, Spritzprägen, Spritzblasen, Spritzstreckblasen, Extrusion, Rohrextrusion, Profilextrusion, Folienextrusion, Extrusionsblasformen. Selbstverständlich können die Formteile nachträglich auch weiter bearbeitet werden.

Besonders vorteilhaft ist dabei, dass die erfindungsgemäßen Formteile, insbesondere diejenigen für hochtransparente und kratzfeste Anwendungen, bevorzugt keine zusätzliche Oberflächenbeschichtung aufweisen (d.h. ohne Schutzlack oder Hartlackierung an der Oberfläche auskommen).

Ebenso ist jedoch die Möglichkeit gegeben, die Formteile mit einer Oberflächenbeschichtung (z.B. als Schutzbeschichtung) zu versehen. In diesem Fall, d.h. bei Beschichtung der erfindungsgemäßen Formteile mit einem Hardcoat, ergibt sich eine doppelte Sicherheit, d.h. das Formteil kann seine Funktion ohne Trübung noch weiter und länger erfüllen, auch wenn die Lackschicht nach einiger Zeit abgenutzt oder verschlissen wäre. Solche Anforderungen nach einer doppelten Absicherung gibt es schon in der Praxis für komplexe technische Geräte oder Systeme, bei denen das Auswechseln eines transparenten Funktionsteils nicht möglich oder zu aufwändig wäre, wie z.B. Displays oder Kameralinsen. Für solche speziellen Einsatzzwecke könnte man mit der Lackierung der an und für sich schon kratzfesten Formteile zusätzliche Sicherheit gewinnen und die Lebensdauer eines ganzen Systems verlängern. Gemessen am Preis eines komplexen Gesamtsystems würden hier die Kosten für eine nachträgliche Lackierung eines kleinen transparenten Formteils nicht stark ins Gewicht fallen.

Verwendungsmöglichkeiten der Formmasse bzw. der daraus hergestellten Formteile sind hochtransparente und kratzfeste Anwendungen, insbesondere für Formkörper wie Linsen, Lupen, Brillen, optischer Filter, Prismen, Fresnel-Linsen, Infrarotfenster, Scheiben, Schutzscheiben, Schutzfolien, Schaugläser, Leuchten-Abdeckungen, Verkleidungen oder Gehäuse, Displays, Touchscreens, Sensorgehäuse, Mobiltelefone, Telefone, Messgeräte, Musik-Geräte, TV-Geräte, Navigationsgeräte, Fotoapparate, Armbanduhren, Spielcomputer, Spielkonsolen, PCs, Bedienungstasten, Blenden oder Manipulationsfelder, Griffe, Behälter, Flaschen, Boxen, Rohre oder Profile.

Vorliegende Erfindung wird anhand der nachfolgenden Versuche und Beispiele näher verdeutlicht. Dabei sind die Beispiele keineswegs so zu verstehen, die Erfindung auf die in den Beispielen speziell verwendeten Parameter zu beschränken.

### Beispiel 1

### Vergleich der Kratzfestigkeit zu handelsüblichen Kunststoffen

Die besonders hohe Kratzfestigkeit der erfindungsgemäßen Polyamidzusammensetzungen wurde mit dem Handtaschentest bzw. dem Tumbler-Test ermittelt. Beim Handtaschentest werden zwei rückseitig verklebte Linsenplatten dem Handtascheninhalt zugefügt und eine Stunde lang im Granulatmixer gerührt, während beim Tumbler-Test ein 10 kg Fass mit 5 kg PE Granulat gefüllt wird und der Prüfling, eine Linsen-Platte mit den Abmessungen 100x80x2 mm, in das Granulat gesteckt wird. Das Fass wird dann über die gewünschte Zeit (im vorliegenden Fall 2 Stunden) asymmetrisch gedreht. Die Bezeichnung Tumbler steht dabei für ein Anrollfass mit äußerem Motorantrieb, um es in windschiefer Lage im Zusammenspiel mit der Gravitation und daraus resultierender Mischwirkung rotieren zu lassen, in dem normalerweise Granulate mit pulverförmigen Additiven für Kleinversuche angerollt werden. Im vorliegenden Fall wird dieses Fass aber nicht zum Anrollen, sondern allein in seiner Funktion als Tumbler benutzt, wobei neben den 2mm dicken Prüfplatten auch noch eine gewisse Menge Polyethylengranulat in das Fass eingefüllt wird. Das PE-Granulat, das ja gewisse Rundungen und leichte Kanten aufweist, reibt und kratzt beim Rotieren des Tumblers an den Oberflächen der Prüfplatten, ähnlich wie ein PE-Stift (Pen) oder vergleichbar mit Gegenständen in einer Handtasche, die geschüttelt wird.

Der Handtaschentest ist ein unspezifischer Test gegen alle möglichen Kratzarten. Hier wird die allgemeine Kratzfestigkeit erfasst, die aus häufig vorkommenden Beanspruchungsarten zusammengesetzt ist.

Die Ergebnisse des Handtaschentests sind in Tabelle 1 zusammengefasst.

**Tabelle 1: Handtaschentest von TR 60 im Vergleich zu handelsüblichen Kunststoffen (PC: Polycarbonat, PMMA: Polymethylmethacrylat, HC: Hardcoat)**

| | | Beispiel | Vergleichsbeispiele | | | |
|---|---|---|---|---|---|---|
| Polyamid Typ | | B1 TR 60 | VB1 PC Lexan LS2 | VB2 PMMA 8N | VB3 PC+HC Lexan LS2 | VB4 PMMA+HC 8N |
| MACM | mol-% | 37,7 | | | | |
| IPS | mol-% | 19,3 | | | | |
| TPS | mol-% | 18,4 | | | | |
| LC12 | mol-% | 24,6 | | | | |
| Summe | mol-% | 100 | | | | |
| Eigenschaften | | | | | | |
| Tg | °C | 192 | | | | |
| MVR/275°C/5 kg | ccm/10min | 4 | | | | |
| E-Modul | MPa | 2200 | | | | |
| KSZ/RT | kJ/m2 | 8 | | | | |
| Haze/2mm | % Original | 0,4 | 0,4 | 0,1 | 0,3 | 0,1 |
| Transp./2mm | % Original | 93,4 | 91,8 | 94 | | |
| Kratzetest | Handtasche | | | | | |
| Haze/2mm | Differenz % | 0,73 | 3,2 | 3,18 | 1,14 | 1,63 |

Grilamid TR 60 mit einem Tg = 190°C zeigt den geringsten Anstieg im Haze nach dem Handtaschentest. Im Vergleich dazu zeigen Polycarbonat und PMMA deutlich höhere Haze Werte. Nach der Lackierung von PC und PMMA mit handelsüblichen Hartlacken, die in der Brillenindustrie eingesetzt werden, zeigen beide Polymere deutlich bessere Haze-Werte nach dem Handtaschentest. Sie liegen aber immer noch schlechter als für Grilamid TR 60 ohne Lackierung. Der Handtaschentest entspricht einer häufig vorkommenden Beanspruchung von transparenten Oberflächen. Gegenüber dieser Belastungsart zeigt Grilamid TR 60 die höchste Belastbarkeit und ist auch besser als lackiertes PC oder PMMA. Die Lackierung (Hardcoat) bringt nur am Anfang Vorteile und später deutliche Nachteile. PA TR 60 weist im Handtaschentest ein sehr ausgewogenes Eigenschaftsprofil gegen verschiedene Einwirkungsarten auf. Der Zusatz von Gleitmitteln verstärkt die Resistenz gegen stumpfe Belastungen wie PE-Granulat. Aus dem Handtaschentest geht deutlich die verbesserte allgemeine Kratzfestigkeit selbst ohne Schutzlackierung hervor.

### Beispiel 2

### Vergleich der zugegebenen Additive im Tumbler-Test

Die Kratzfestigkeit hängt sehr stark von der Art ab, wie Kratzer erzeugt werden. So erzeugen nadelartige harte Metallspitzen eine andere Art von Beschädigung als weiche PE-Pen Spitzen auf Displayoberflächen. Bleistifte oder beispielsweise Putztücher mit und ohne Waschflüssigkeiten zeigen andere Kratzfestigkeiten. Häufig werden Angaben wie Bleistifthärte oder Ritzhärte als Maß für die zu erwartende Kratzfestigkeit verwendet. Gleitmittel können die Kratzfestigkeit von Polymeren verbessern oder verschlechtern. Bei transparenten Werkstoffen verursachen gerade die Gleitmittel, die die Kratzfestigkeit verbessern, eine unangenehme Trübung und verhindern eine Anwendung. In Platten 100x80x2 mm aus transparenten Polyamiden wie beispielsweise Grilamid TR 60 (XE 3942) verursachen Versapol^{®} (erhältlich von Polichem, Paraffinöl), Loxiol^{®} G40 (erhältlich von Cognis, Isotridecylstearat), Stearylstearat, Licomont^{®} CAV 102 P (erhältlich von Clariant, Ca-Salze von Montansäuren), Laventin^{®} LNB (erhältlich von BASF, Alkanolpolygylkolether) und Acrawax^{®} C (erhältlich von IMS Company, N,N'-Ethylen-bisstearamid), Licomont^{®} ET 132 P (erhältlich von Clariant, Montansäureester), Licowax^{®} E (erhältlich von Clariant, Montansäureester), Licowax^{®} OP (erhältlich von Clariant, teilweise verseifte Montansäureester) eine geringe Trübung (Haze). Nach zwei Stunden der Beanspruchung dieser Platten in einem Tumbler gefüllt mit PE Granulat zeigen die Gleitmittel Loxiol, Ca-Stearat und Licomont CAV 102 P den geringsten Anstieg im Haze und den geringsten Glanzverlust. Die Gleitmittel in den Beispielen 2 bis 11 wurden auf das Polymergranulat Grilamid TR 60 (XE 3942) aufgetrommelt und mit einem ZSK25 Doppelwellen Extruder von WP eingearbeitet. 100x80x2 mm Platten mit Filmanguss wurden auf einer Arburg-Maschine hergestellt. Die Ergebnisse der Beispiele sind in Tabelle 2 zusammengefasst.

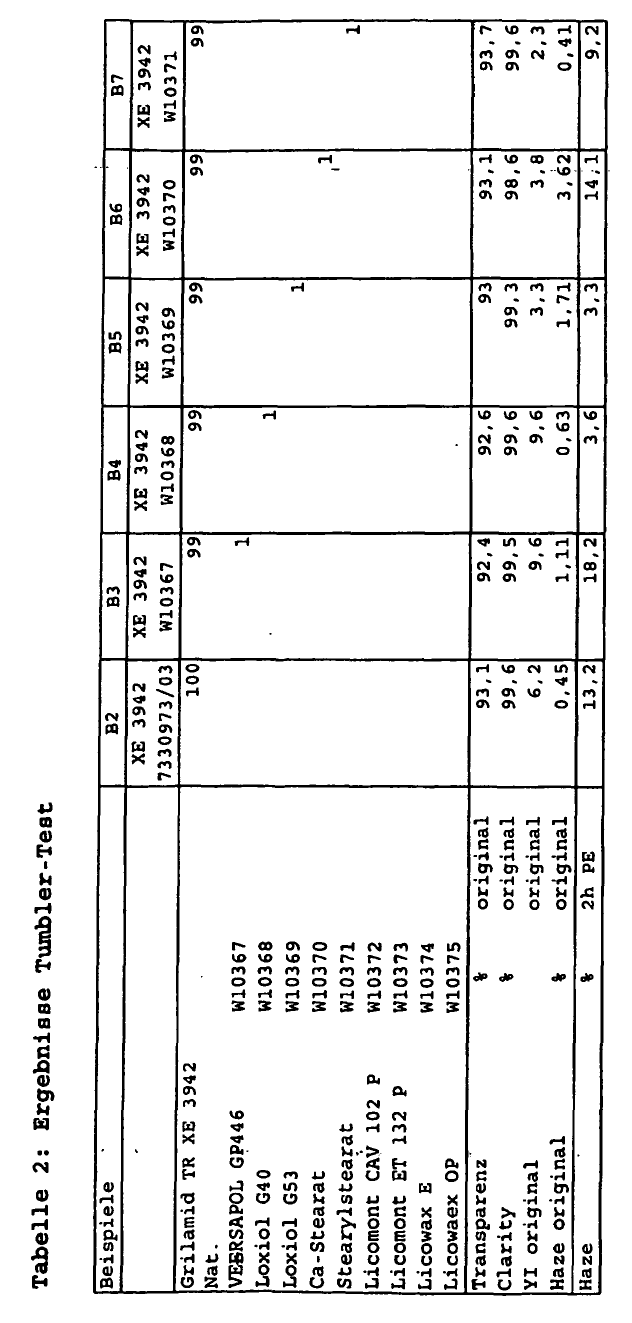

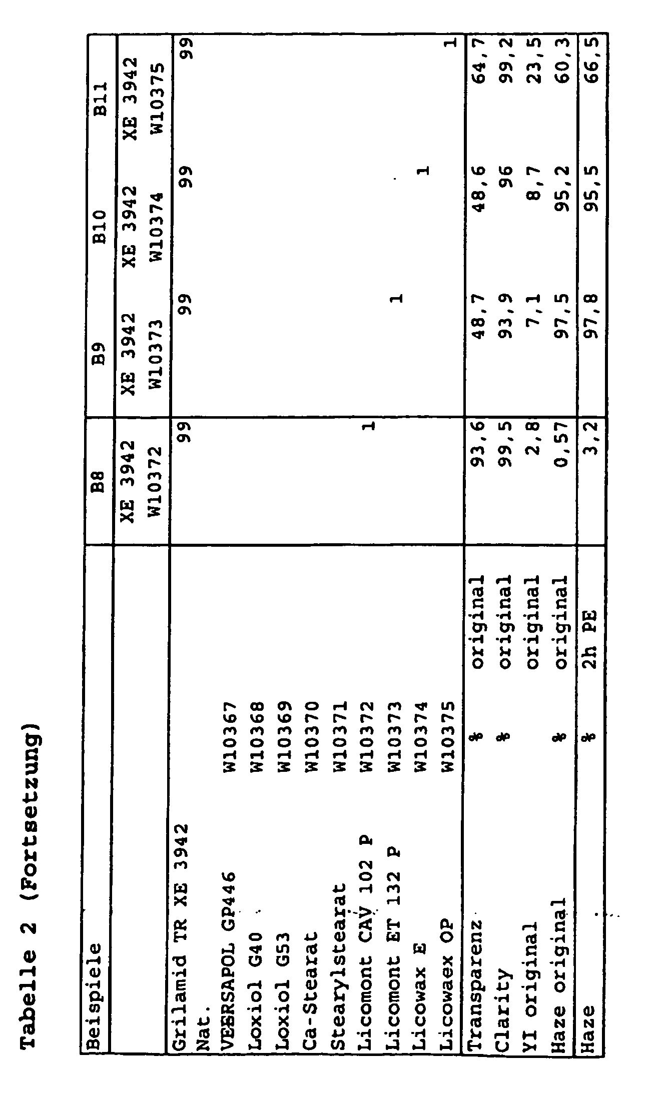

### Beispiel 3

### Vergleich der zugegebenen Gleitmittel

Additive werden in der Regel in der Form von Masterbatches (MB) während der Formgebung auf der Spritzgießmaschine zugegeben. Dazu ist die Herstellung von MB mit hohen Füllgraden, also hohe Zugaben der wirksamen Additive, notwendig, damit Zusätze von weniger als 5 % MB zum Polymergranulat die notwendige Additivmenge eintragen. Häufig können die niederviskosen Additive nicht oder nur schlecht in der Polymerschmelze ausreichend verteilt werden.

Die Wirkungsweise gleicher Additivmengen compoundiert oder als MB zugemischt, weicht häufig voneinander ab, insbesondere bei Gleitmitteln, die hauptsächlich an der Oberfläche im Kontakt zu den Maschinenteilen ihre Wirksamkeit entfalten müssen.

Gleitmittel, die leicht an die Oberfläche wandern, sind meist stark unverträglich zur Polymerschmelze und neigen zur Phasentrennung, die dann Haze (Trübung) im transparenten Formteil verursacht.

Die üblichen Prozesse zur Herstellung von MB's als Compounds, die Gleitmittel in den Einzug des Extruders dosieren, versagen ebenso wie die Prozesse, die flüssig in die Schmelze dosieren und scheitern an der geringen Neigung der Polymerschmelze das Gleitmittel aufzunehmen.

Entgegen den Erwartungen konnten mit den ausgewählten, wirksamen Gleitmitteln MB's mit 10 % Anteil hergestellt werden. Das Gleitmittel wird dazu einige Extruderzonen entfernt vom Einzug in die Schmelze gegeben. Dadurch konnten MB-Granulate (eingesetzt in Beispiel 13 - 23) in ausgezeichneter Homogenität, mit ausgezeichnetem Schnitt hergestellt werden, vgl. Tabelle 3.

Einen sehr niedrigen Haze im Formteil original, d.h. vor dem Tumbler Test, zeigen Ca-Stearat, Loxiol G40, Stearylstearat und Licomont CAV 102 P in den Beispielen 17 - 21. Nach dem Tumbler Test zeigt das Loxiol G40 (Beispiele 18 u. 19) deutlich geringere Haze Werte und geringeren Glanzverlust als die übrigen. Die Resultate sind gut reproduzierbar (Beispiel 13/14, 18/19, 20/21).

Damit konnten Formteile in der Kratzfestigkeit deutlich verbessert werden ohne die Transparenz negativ zu beeinflussen.

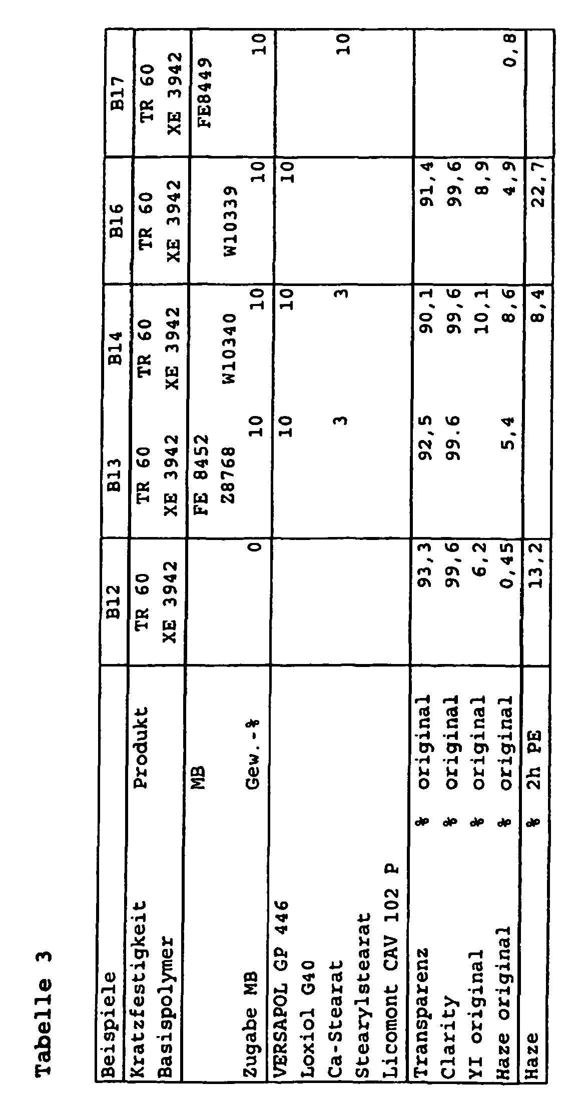

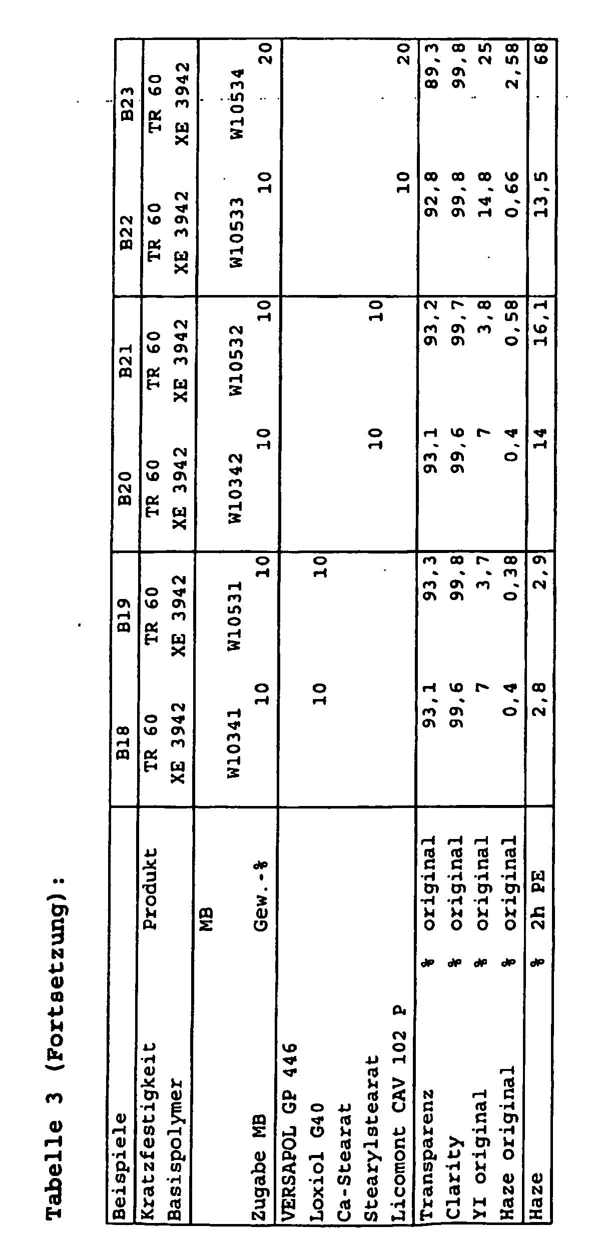

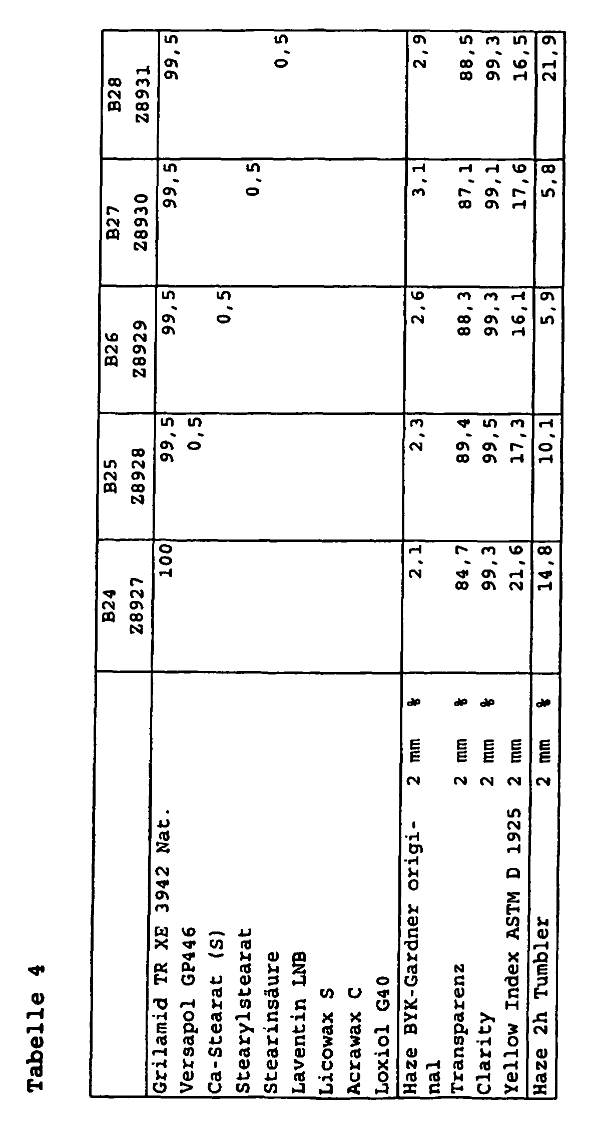

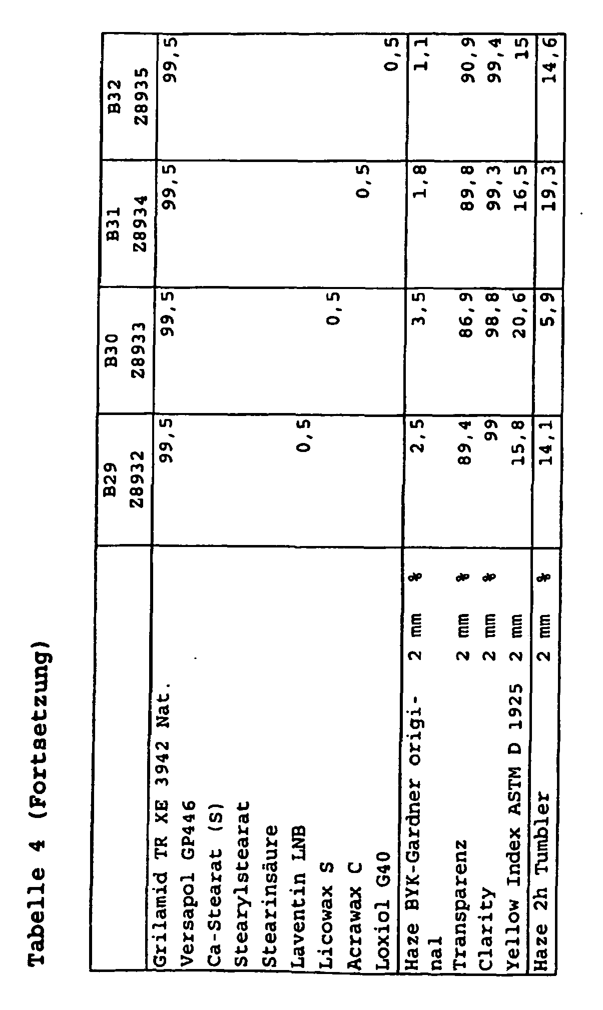

Die in der Tabelle 4 aufgelisteten Messergebnisse zeigen, dass sich die besten Haze-Werte nach dem Tumler-Test für Grilamid TR 60 mit 0,5 Gew.-% Ca-Stearat, Stearylstearat und Licowax ergeben, die überlegene Messergebnisse gegenüber der Versapol-Variante ergeben.

Die Haze-Werte für Grilamid TR 60 mit 1 Gew.-% Gleitmittel in Tabelle 2 zeigen vor dem Tumbler Test Vorteile für Loxiol G40 und Licomont CAV 102P. Die Haze-Werte nach dem Tumbler Test zeigen dagegen Vorteile für Loxiol G40, Stearylstearat und Licomont CAV 102P. Loxiol G40 zeigt gegenüber dem Licomont den geringeren Gelbstich und stellt damit für hohe Zugabemengen die beste Lösung dar.

Gegenüber Formteilen ohne Gleitmittel wird dadurch eine deutliche Verbesserung der Kratzfestigkeit nach dem Tumbler Test erzielt, dadurch gekennzeichnet, dass dabei der Haze geringer ist.

## Patentansprüche

1. Transparente Polyamidformmasse, enthaltend mindestens ein Copolyamid und ein Gleitmittel, **dadurch gekennzeichnet, dass** die Polyamidformmasse
(A1) 50 bis 99,99 Gew.-Teile eines Copolyamides, aufgebaut aus:
a) 15 bis 42 Mol-% Bis-(4-amino-3-methylcyclohexyl)methan (MACM), das bis zu 50 Mol-% durch Bis-(4-amino-cyclohexyl)methan (PACM) ersetzt sein kann,
b) 15 bis 42 Mol-% Isophthalsäure (IPS), die bis zu 50 Mol-% durch Terephthalsäure (TPS) und/oder aliphatische Dicarbonsäuren ersetzt sein kann, und
c) 16 bis 70 Mol-% Laurinlactam (LC 12), und
(A2) 0 bis 49,99 Gew.-Teile eines transparenten Polyamids basierend auf MACM und/oder PACM und Dicarbonsäuren mit mindestens 9 C-Atomen, und
(A3) 0 bis 29,99 Gew.-Teile eines aliphatischen Polyamids basierend auf Monomeren ausgewählt aus Diaminen mit mindestens 8 C-Atomen, Dicarbonsäuren mit mindestens 10 C-Atomen, Lactamen mit mindestens 10 C-Atomen und Aminocarbonsäuren mit mindestens 10 C-Atomen, wobei die Summe von (A2) und (A3) maximal 49,99 Gew.-Teile beträgt, und
(B) 0,01 bis 5 Gew.-Teile mindestens eines Gleitmittels ausgewählt aus Salzen der Stearinsäure, Isotridecylstearat, Montansäureester und/oder Salzen der Montansäuren, und
(C) 0 bis 3 Gew.-Teile weitere Additive enthält,
mit der Maßgabe dass die Summe von (A1) und (A2) und (A3) und (B) 100 Gewichtsteile ergibt.

2. Transparente Polyamidformmasse nach Anspruch 1, **dadurch gekennzeichnet, dass** das mindestens eine Gleitmittel (B) mit einem Anteil von 0,1 bis 3 Gew.-%, bevorzugt 0,2 bis 2 Gew.-%, besonders bevorzugt mit 0,5 bis 1,5 Gew.-% und äußerst bevorzugt mit 0,8 bis 1,2 Gew.-% enthalten ist.

3. Transparente Polyamidformmasse nach einem der vorhergehenden Ansprüche, **dadurch gekennzeichnet, dass** das Gleitmittel ein Ca-Salz der Montansäuren ist.

4. Transparente Polyamidformmasse nach einem der Ansprüche 1 bis 2, **dadurch gekennzeichnet, dass** das aus Salzen der Stearinsäure ausgewählte Gleitmittel ein Metallstearat ist.

5. Transparente Polyamidformmasse nach einem der vorhergehenden Ansprüche, **dadurch gekennzeichnet, dass** das Copolyamid (A1) aus den Edukten
a) 30 bis 42 Mol-% MACM, das bis zu 50 Mol-% durch PACM ersetzt sein kann,
b) 30 bis 42 Mol-% IPS, die bis zu 50 Mol-% durch TPS und/oder aliphatische Dicarbonsäuren ersetzt sein kann, und
c) 16 bis 40 Mol-% LC 12
aufgebaut ist.

6. Transparente Polyamidformmasse nach Anspruch 5, **dadurch gekennzeichnet, dass** das Copolyamid (A1) aus den Edukten
a) 35 bis 40 Mol-% MACM
b) 18 bis 22 Mol-% IPS sowie 16 bis 20 Mol-% TPS und
c) 22 bis 27 Mol-% LC 12
aufgebaut ist.

7. Transparente Polyamidformmasse nach einem der vorhergehenden Ansprüche, **dadurch gekennzeichnet, dass** die weiteren Additive (C) ausgewählt sind aus der Gruppe UV-Stabilisatoren, Hitzestabilisatoren, Katalysatoren, transparente Farbstoffe, phototrope Additive, Antistatikmittel, Verarbeitungshilfsmittel und Lasermarkieradditive.

8. Transparente nach einem der vorhergehenden Ansprüche, **dadurch gekennzeichnet, dass** die relative Viskosität (RV) der Polyamidformmasse gemessen in 0,5 %-iger m-Kresollösung > 1,45, bevorzugt 1,53 bis 1,56 ist.

9. Transparente Polyamidformmasse nach einem der vorhergehenden Ansprüche, **dadurch gekennzeichnet, dass** der Tg-Wert > 175 °C ist.

10. Transparente Polyamidformmasse nach einem der vorhergehenden Ansprüche, **dadurch gekennzeichnet, dass** sie bei Prüfung in Form einer Platte mit einer Dicke von 2 mm eine Trübung (Haze) gemessen nach dem Byk Gardner Test gemäß ASTM 1003 aufweist, die um maximal 200 % größer ist verglichen mit einer 2 mm dicken Platte aus einer sonst gleichen Polyamidformmasse aber ohne Gleitmittel (B).

11. Transparente Polyamidformmasse nach einem der vorhergehenden Ansprüche, **dadurch gekennzeichnet, dass** sie bei Prüfung in Form einer Platte mit einer Dicke von 2 mm eine Trübung (Haze) gemessen nach dem Byk Gardner Test gemäß ASTM 1003 nach einer Behandlungsdauer von 2 Stunden im Tumbler aufweist, die kleiner ist verglichen mit einer 2 mm dicken Platte aus einer sonst gleichen Polyamidformmasse aber ohne Gleitmittel (B), welche auch derselben Behandlung im Tumbler unterworfen wurde.

12. Transparente Polyamidformmasse nach einem der vorhergehenden Ansprüche, **dadurch gekennzeichnet, dass** sie bei Prüfung in Form einer Platte mit einer Dicke von 2 mm eine Transmission > 90 %, bevorzugt > 91 % aufweist.

13. Transparente Polyamidformmasse nach einem der vorhergehenden Ansprüche, **dadurch gekennzeichnet, dass** sie gemessen an einem daraus hergestellten Prüfkörper einen E-Modul von mindestens 1800 MPa aufweist.

14. Formteil, hergestellt aus einer transparenten Polyamidformmasse nach mindestens einem der Ansprüche 1 bis 13.

15. Formteil gemäß Anspruch 14 für hochtransparente und kratzfeste Anwendungen ohne zusätzliche Oberflächenbeschichtung.

16. Formteil nach Anspruch 14 für hochtransparente und kratzfeste Anwendungen, wobei die Oberfläche zumindest teilweise beschichtet ist.

## Claims

1. Transparent polyamide moulding compound, containing at least one copolyamide and one lubricant, **characterised in that** the polyamide moulding compound contains
(A1) 50 to 99.99 parts by weight of a copolyamide, constructed from:
a) 15 to 42% by mol bis-(4-amino-3-methylcyclohexyl)methane (MACM), which can be replaced up to 50% by mol by bis-(4-aminocyclohexyl)methane (PACM),
b) 15 to 42% by mol isophthalic acid (IPS), which can be replaced up to 50% by mol by terephthalic acid (TPS) and/or aliphatic dicarboxylic acids, and
c) 16 to 70% by mol laurinlactam (LC 12), and
(A2) 0 to 49.99 parts by weight of a transparent polyamide based on MACM and/or PACM and dicarboxylic acids with at least 9 C-atoms, and
(A3) 0 to 29.99 parts by weight of an aliphatic polyamide based on monomers selected from diamines with at least 8 C-atoms, dicarboxylic acids with at least 10-C atoms, lactams with at least 10 C-atoms and amino carboxylic acids with at least 10 C-atoms, the sum of (A2) and (A3) being at most 49.99 parts by weight, and
(B) 0.01 to 5 parts by weight of at least one lubricant selected from salts of stearic acid, isotridecylstearate, montanic acid esters, and/or salts of montanic acids, and
(C) 0 to 3 parts by weight of further additives,
with the proviso that the sum of (A1) and (A2) and (A3) and (B) produces 100 parts by weight.

2. Transparent polyamide moulding compound according to claim 1, **characterised in that** the at least one lubricant (B) is contained with a proportion of 0.1 to 3% by weight, preferably 0.2 to 2% by weight, particularly preferred with 0.5 to 1.5% by weight and very particularly preferred with 0.8 to 1.2% by weight.

3. Transparent polyamide moulding compound according to one of the preceding claims, **characterised in that** the lubricant is a Ca salt of montanic acids.

4. Transparent polyamide moulding compound according to one of the claims 1 to 2, **characterised in that** the lubricant selected from salts of stearic acid is a metal stearate.

5. Transparent polyamide moulding compound according to one of the preceding claims, **characterised in that** the copolyamide (A1) is constructed from the educts
a) 30 to 42% by mol MACM, which can be replaced up to 50% by mol by PACM,
b) 30 to 42% by mol IPS, which can be replaced up to 50% by mol by TPS and/or aliphatic dicarboxylic acids, and
c) 16 to 40% by mol LC 12.

6. Transparent polyamide moulding compound according to claim 5, **characterised in that** the copolyamide (A1) is constructed from the educts
a) 35 to 40% by mol MACM
b)
18 to 22% by mol IPS and also
16 to 20% by mol TPS and
c) 22 to 27% by mol LC 12.

7. Transparent polyamide moulding compound according to one of the preceding claims, **characterised in that** the further additives (C) are selected from the group of UV stabilisers, heat stabilisers, catalysts, transparent colourants, phototropic additives, antistatic agents, processing aids and laser marking additives.

8. Transparent polyamide moulding compound according to one of the preceding claims, **characterised in that** the relative viscosity (RV) of the polyamide moulding compound, measured in 0.5% m-cresol solution, is > 1.45, preferably 1.53 to 1.56.

9. Transparent polyamide moulding compound according to one of the preceding claims, **characterised in that** the Tg value is > 175°C.

10. Transparent polyamide moulding compound according to one of the preceding claims, **characterised in that**, when tested in the form of a sheet with a thickness of 2 mm, it has an opacity (haze), measured according to the Byk Gardner test according to ASTM 1003, which is greater by at most 200% compared with a 2 mm thick sheet made of an otherwise identical polyamide moulding compound, however without lubricant (B).

11. Transparent polyamide moulding compound according to one of the preceding claims, **characterised in that**, when tested in the form of a sheet with a thickness of 2 mm, it has an opacity (haze), measured according to the Byk Gardner test according to ASTM 1003, after a treatment duration of 2 hours in the tumbler, which is less compared with a 2 mm thick plate made of an otherwise identical polyamide moulding compound, however without lubricant (B), which was subjected also to the same treatment in the tumbler.

12. Transparent polyamide moulding compound according to one of the preceding claims, **characterised in that**, when tested in the form of a sheet with a thickness of 2 mm, it has a transmission > 90%, preferably > 91%.

13. Transparent polyamide moulding compound according to one of the preceding claims, **characterised in that** it has a modulus of elasticity of at least 1800 MPa, measured on a test body produced therefrom.

14. Moulded article, produced from a transparent polyamide moulding compound according to at least one of the claims 1 to 13.

15. Moulded article according to claim 14 for highly transparent and scratch-resistant applications without additional surface coating.

16. Moulded article according to claim 14 for highly transparent and scratch-resistant applications, the surface being at least partially coated.

## Revendications

1. Composé de moulage transparent en polyamide, contenant au moins un copolyamide et un lubrifiant, **caractérisé en ce que** le composé de moulage en polyamide contient :
(A1) 50 à 99,99 parties en poids d'un copolyamide, constitué de :
a) 15 à 42 % en moles de bis-(4-amino-3-méthyl-cyclohéxyl)méthane (MACM), qui peut être remplacé jusqu'à hauteur de 50 % en moles par du bis-(4-amino-cyclohéxyl)méthane (PACM),
b) 15 à 42 % en moles d'acide isophtalique (IPS), qui peut être remplacé jusqu'à hauteur de 50 % en moles par de l'acide téréphtalique (TPS) et/ou des acides dicarboxyliques aliphatiques, et
c) 16 à 70 % en moles de laurolactame (LC 12), et
(A2) 0 à 49,99 parties en poids d'un polyamide transparent à base de MACM et/ou de PACM et d'acides dicarboxyliques ayant au moins 9 atomes de carbone, et
(A3) 0 à 29,99 parties en poids d'un polyamide aliphatique à base de monomères choisis parmi des diamines ayant au moins 8 atomes de carbone, des acides dicarboxyliques ayant au moins 10 atomes de carbone, des lactames ayant au moins 10 atomes de carbone et des acides aminocarboxyliques ayant au moins 10 atomes de carbone, la somme de (A2) et de (A3) représentant au maximum 49,99 parties en poids, et
(B) 0,01 à 5 parties en poids d'au moins un lubrifiant choisi parmi des sels de l'acide stéarique, le stéarate d'isotridécyle, des esters d'acide montanique et/ou des sels des acides montaniques, et
(C) 0 à 3 parties en poids d'autres additifs,
Dans la mesure où la somme de (A1), (A2), (A3) et (B) représente 100 parties en poids.

2. Composé de moulage transparent en polyamide selon la revendication 1, **caractérisé en ce que** le au moins un lubrifiant (B) est contenu en proportion de 0,1 à 3 % en poids, de préférence de 0,2 à 2 % en poids, mieux encore de 0,5 à 1,5 % en poids et, bien mieux encore, de 0,8 à 1,2 % en poids.

3. Composé de moulage transparent en polyamide selon l'une quelconque des revendications précédentes, **caractérisé en ce que** le lubrifiant est un sel de Ca des acides montaniques.

4. Composé de moulage transparent en polyamide selon l'une quelconque des revendications 1 à 2, **caractérisé en ce que** le lubrifiant choisi parmi des sels de l'acide stéarique est un stéarate de métal.

5. Composé de moulage transparent en polyamide selon l'une quelconque des revendications précédentes, **caractérisé en ce que** le copolyamide (A1) est élaboré à partir des éduits suivants :
a) 30 à 42 % en moles de MACM, qui peut être remplacé jusqu'à 50 % en moles par du PACM,
b) 30 à 42 % en moles d'IPS, qui peut être remplacé jusqu'à 50 % en moles par du TPS et/ou des acides dicarboxyliques aliphatiques, et
c) 16 à 40 % en moles de LC 12.

6. Composé de moulage transparent en polyamide selon la revendication 5, **caractérisé en ce que** le copolyamide (A1) est élaboré à partir des éduits suivants :
a) 35 à 40 % en moles de MACM
b)
18 à 22 % en moles d'IPS ainsi que
16 à 20 % en moles de TPS, et
c) 22 à 27 % en moles de LC 12.

7. Composé de moulage transparent en polyamide selon l'une quelconque des revendications précédentes, **caractérisé en ce que** les autres additifs (C) sont choisis dans le groupe constitué des stabilisateurs UV, des stabilisateurs thermiques, des catalyseurs, des colorants transparents, des additifs phototropes, des agents antistatiques, des agents auxiliaires de traitement et des additifs de marquage au laser.

8. Composé de moulage transparent en polyamide selon l'une quelconque des revendications précédentes, **caractérisé en ce que** la viscosité relative (RV) du composé de moulage en polyamide, mesurée dans une solution de m-crésol à 0,5 %, a une valeur > 1,45, de préférence comprise entre 1,53 et 1,56.

9. Composé de moulage transparent en polyamide selon l'une quelconque des revendications précédentes, **caractérisé en ce que** la valeur de Tg est > 175 °C.

10. Composé de moulage transparent en polyamide selon l'une quelconque des revendications précédentes, **caractérisé en ce qu'**il présente, lors d'un essai sous la forme d'une plaque avec une épaisseur de 2 mm, un trouble (haze) mesuré avec le test de Byk Gardner selon la norme ASTM 1003 et au maximum supérieur de 200 % à celui obtenu avec une plaque d'une épaisseur de 2 mm constituée d'un composé de moulage en polyamide strictement identique mais sans lubrifiant (B).

11. Composé de moulage transparent en polyamide selon l'une quelconque des revendications précédentes, **caractérisé en ce qu'**il présente, lors d'un essai sous la forme d'une plaque avec une épaisseur de 2 mm, un trouble (haze) mesuré avec le test de Byk Gardner selon la norme ASTM 1003 après une durée de traitement de 2 heures dans un mélangeur de type culbuteur, qui est inférieur à celui obtenu avec une plaque d'une épaisseur de 2 mm constituée d'un composé de moulage en polyamide strictement identique mais sans lubrifiant (B), lequel a également été soumis au même traitement dans le mélangeur de type culbuteur.

12. Composé de moulage transparent en polyamide selon l'une quelconque des revendications précédentes, **caractérisé en ce qu'**il présente, lors d'un essai sous la forme d'une plaque avec une épaisseur de 2 mm, une valeur de transmission > 90 %, de préférence > 91 %.

13. Composé de moulage transparent en polyamide selon l'une quelconque des revendications précédentes, **caractérisé en ce qu'**il présente un module E d'au moins 1800 MPa, mesuré sur un échantillon issu de celui-ci.

14. Pièce moulée fabriquée à partir d'un composé de moulage transparent en polyamide selon au moins l'une quelconque des revendications 1 à 13.

15. Pièce moulée selon la revendication 14, pour des applications à transparence élevée et résistantes aux rayures, sans revêtement de surface supplémentaire.

16. Pièce moulée selon la revendication 14, pour des applications à transparence élevée et résistantes aux rayures, dans laquelle la surface est revêtue au moins partiellement.
